# EUROPEAN PATENT SPECIFICATION

(11) **EP 2 582 992 B1**
(45) Date of publication and mention of the grant of the patent: **11.02.2015**
(21) Application number: 11743619.6
(22) Date of filing: 14.06.2011
(51) Int. Cl.: F16C 19/28, F16C 33/48, F16C 33/66, F16C 33/76

(54) **ROLLING BEARING ASSEMBLY FOR ROTATIONAL SHAFT WITH OIL PASSAGE**
WÄLZLAGERANORDNUNG FÜR DREHWELLE MIT ÖLKANAL
ENSEMBLE ROULEMENT À ROULEAUX POUR ARBRE ROTATIF COMPRENANT UN PASSAGE D'HUILE

(30) Priority: 15.06.2010 JP 2010136046
(43) Date of publication of application: 24.04.2013
(73) Proprietor: TOYOTA JIDOSHA KABUSHIKI KAISHA, Toyota-shi, Aichi-ken, 471-8571 (JP)
(72) Inventor: HARADA, Kenichi, Toyota-shi Aichi-ken 471-8571 (JP); MURAKAMI, Motoichi, Toyota-shi Aichi-ken 471-8571 (JP); NAKAOKA, Kenichi, Osaka-shi Osaka 542-8502 (JP); WASEDA, Yoshitaka, Osaka-shi Osaka 542-8502 (JP)
(74) Representative: Albutt, Anthony John
(86) International application number: PCT/IB2011/001647
(87) International publication number: WO 2011/158112

(56) References cited:
- DE-A1- 4 120 885
- US-A- 5 547 060

## Description

### BACKGROUND OF THE INVENTION

### 1. Field of the Invention

The invention relates to a rolling bearing assembly for a rotational shaft with an oil passage. In particular, the invention relates to a rolling bearing assembly for a rotational shaft with an oil passage that supports a rotational shaft, such as a camshaft of an internal combustion engine (will hereinafter be referred to as "engine"), in which an oil passage is formed, and that is structured to be capable of supplying oil to the oil passage formed in the rotational shaft.

### 2. Description of Related Art

In a bearing assembly for a rotational shaft, such as a camshaft of an engine, the frictional torque needs to be reduced in order to improve the fuel economy by reducing the friction loss in the engine. To this end, rolling bearings have recently been used in place of slide bearings.

Meanwhile, a camshaft, as one example of "rotational shaft", is known which is provided with a so-called variable valve timing mechanism that changes the timings for opening and closing the intake valves and/or exhaust valves, which are opened and closed by valve drive cams, by changing the rotational phase of the camshaft. In such a camshaft, an oil passage is formed through which hydraulic fluid (lubricating oil) is supplied to the actuator of the variable valve timing mechanism. More specifically, the hydraulic fluid is supplied, at given timings, to the oil passage in the camshaft via an oil passage formed in a bearing housing supporting a bearing.

In order to accomplish such supply of hydraulic fluid (lubricating oil) from a bearing housing side oil passage to a rotational shaft side oil passage via a rolling bearing, a bearing assembly described in Japanese Patent Application Publication No. 2008-101714 (JP-A-2008-101714) includes a rolling bearing having rolling elements supporting a rotational shaft and a bearing support member (bearing housing) supporting the rolling bearing, wherein a support side oil passage provided in the bearing support member and a shaft side oil passage provided in the rotational shaft are in communication with each other, the bearing assembly being structured such that the support side oil passage and the shaft side oil passage communicate with each other via a side oil passage that is provided on one side, in the axial direction of the rotational shaft, of the rolling elements and the side oil passage is formed by a side portion provided at one side of the rolling bearing. According to the bearing assembly described in JP-A-2008-101714, since the side oil passage through which the support side oil passage and the shaft side oil passage communicate with each other is provided on one side of the rolling elements, as compared to a case where the lubricating oil is delivered via the gaps between the rolling elements of the rolling bearing, the delivery resistance is low and thus a desired amount of oil and a desired oil pressure can be easily supplied.

In the bearing assembly described in JP-A-2008-101714, however, the bearing support member defining the side oil passage through which the support side oil passage and the shaft side oil passage communicate with each other is simply fit to the rotational shaft. That is, the bearing assembly has no sealing structure, leaving the possibility of oil leaks. In particular, in a state where the engine temperature is high, gaps may be created due to the difference in heat expansivity between the rotational shaft and the bearing support member, increasing an oil leak amount and thus making it impossible to supply the desired amount of oil and the desired oil pressure to the actuator.

US 5,547,060 A1 discloses a rolling bearing assembly according to the preamble of claim 1.

### SUMMARY OF THE INVENTION

The invention provides a rolling bearing assembly for a rotational shaft with an oil passage, which achieves high sealing performance and enables easily supplying a desired amount of oil and a desired oil pressure.

A first aspect of the invention is related to a rolling bearing assembly for a rotational shaft with an oil passage that includes: a bearing housing; and a rolling bearing that is housed in the bearing housing and that rotatably supports the rotational shaft in which the oil passage is formed. The rolling bearing includes: an inner ring that is attached on the rotational shaft; an outer ring that is fixed on the bearing housing; a retainer that is arranged between the inner ring and the outer ring; and a plurality of rolling elements that is equiangularly supported by the retainer. The rolling bearing assembly for the rotational shaft with the oil passage further includes a bearing oil passage at least a portion of which is defined by a flange portion that is formed at the retainer such that the flange portion is configured to contact an axial side face of the inner ring and an axial side face of the outer ring. The bearing oil passage connects an oil passage formed in the bearing housing and the oil passage formed in the rotational shaft.

According to the first aspect of the invention, the oil is supplied from the oil passage formed in the bearing housing, and as the oil enters the bearing oil passage, the flange portion that defines at least a portion of the bearing oil passage comes into contact with the axial side faces of the inner and outer rings. That is, the bearing oil passage is highly sealed by the flange portion being brought into contact with the axial side faces of the inner and outer rings by the pressure of the oil supplied into the bearing oil passage, and the oil is supplied to the shaft side oil passage communicating with the bearing oil passage. Thus, oil leaks can be prevented or minimized between the bearing housing and the rotational shaft, and thus a desired amount of oil and a desired oil pressure can be supplied.

In the above aspect, an outer diameter of the flange portion may be larger than an inner diameter of the outer ring, and an inner diameter of the flange portion may be smaller than an outer diameter of the inner ring.

In the above aspect, the rolling bearing may be a multi-row rolling bearing. A plurality of the retainers may be provided in a multi-row and each of the plurality of the retainers is arranged in respective row of the multi-row rolling bearing. The bearing oil passage may be defined between the flange portions that are formed at the respective retainers.

In the above aspect, the flange portions may include a pair of a left flange portion and a right flange portion that are axially arranged. The outer ring may include a pair of a left groove side face and a right groove side face that are axially arranged. The inner ring may include a pair of a left inner ring and a right inner ring that are axially arranged. The left flange portion may be configured to contact the left groove side face and the left inner ring. The right flange portion may be configured to contact the right groove side face and the right inner ring.

In the above aspect, at least one of the flange portions may include distance-securing means for securing a predetermined distance between the flange portions.

According to the structure described above, even when the oil pressure is low, the distance-securing means secures the predetermined distance between the flange portions formed at the retainers in the respective rows, and therefore the bearing oil passage can be formed reliably. Further, the distance-securing means restricts the movements of the retainers and rolling elements in their thrust directions.

In the above aspect, a plurality of the distance-securing means may be equiangularly arranged.

In the above aspect, the rolling bearing assembly may further include urging means for urging the plurality of retainers apart from each other.

In the above aspect, the urging means may be a spring, and the spring may be arranged between the flange portions.

In the above aspect, the urging means may be an elastic member, and the elastic member may be arranged between the flange portions.

In the above aspect, the elastic member may be annularly formed, and the elastic member may include an oil hole through which the oil passage formed in the bearing housing and the oil passage formed in the rotational shaft communicate with each other.

According to the structure described above, even when the oil pressure is low, the urging means axially presses the retainers in the respective rows, thus achieving high sealing performance. Thus, oil leaks can be always prevented or minimized, and thus a desired amount of oil and a desired oil pressure can be always supplied.

In the above aspect, the rolling bearing assembly may further include connecting means for connecting the plurality of retainers.

In the above aspect, a plurality of the connecting means may be equiangularly arranged between the flange portions.

In the above aspect, the rolling bearing assembly may further include a support member in which the rotational elements arranged between the inner ring and the outer ring are not housed. A flange portion may be formed at the support member such that the flange portion is configured to contact an axial side face of the inner ring and an axial side face of the outer ring. The bearing passage may be defined between the flange portion formed at the retainer and the flange portion formed at the support member.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a sectional view of a rolling bearing assembly for a rotational shaft with an oil passage according to a first embodiment of the invention;
FIG. 2 is a sectional view of a rolling bearing assembly for a rotational shaft with an oil passage according to a second embodiment of the invention;
FIG. 3 is a sectional view of a rolling bearing assembly for a rotational shaft with an oil passage according to a third embodiment of the invention;
FIG. 4 is a sectional view of a rolling bearing assembly for a rotational shaft with an oil passage according to a fourth embodiment of the invention;
FIG. 5 is a sectional view of a rolling bearing assembly for a rotational shaft with an oil passage according to a fifth embodiment of the invention; and
FIG. 6 is a sectional view of a rolling bearing assembly for a rotational shaft with an oil passage according to a sixth embodiment of the invention.

### DETAILED DESCRIPTION OF EMBODIMENTS

Hereafter, embodiments of the invention will be described in detail with reference to the accompanying drawings.

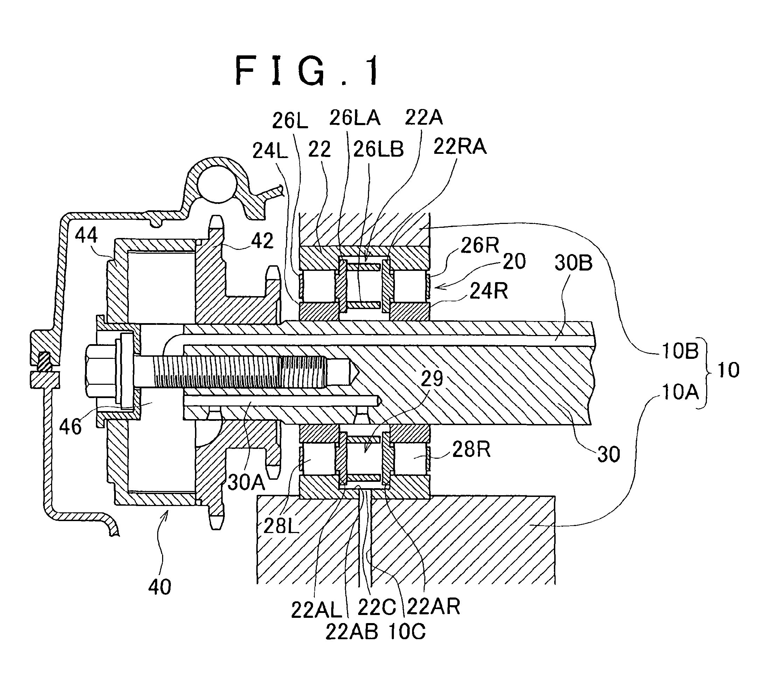

First, the first embodiment in which a rolling bearing assembly for a rotational shaft with an oil passage according to the invention is applied to a camshaft of an engine will be described with reference to FIG. 1.

A bearing housing 10 includes a cam housing 10A that is formed integrally with a cylinder head, not shown in the drawings, or is formed as a part separate from the cylinder head and then attached to the cylinder head, and a cap 10B that is fixed on the cam housing 10A. The cam housing 10A and the cap 10B each have a semicylindrical concave, and a cylindrical bearing housing portion is defined by the cam housing 10A and the cap 10B being joined together. A rolling bearing 20 includes an outer ring 22, inner rings 24L and 24R that are attached on the outer peripheral face of a camshaft 30 as a rotational shaft, a plurality of rolling elements 28L that are arranged between the left inner ring 24L and the outer ring 22 and equiangularly retained by a left retainer 26L that is annular, and a plurality of rolling elements 28R that are arranged between the right inner ring 24R and the outer ring 22 and equiangularly retained by a right retainer 26R that is annular. The rolling elements 28L and 28R are, for example, rollers, needle rollers, or balls.

The rolling bearing 20 of the first embodiment is a so-called double-row rolling bearing with the rolling elements 28L and 28R arranged in two rows, respectively. The outer ring 22 and the inner rings 24L and 24R are formed so as to provide raceway surfaces with which the rolling elements 28L at the left side in FIG. 1 and the rolling elements 28R at the right side in FIG. 1 are in rolling contact, respectively. That is, the outer ring 22 is constituted of two semicircular half parts obtained by dividing the outer ring 22 in a circumferential direction thereof, and an annular groove 22A (having a groove bottom 22AB, and a left groove side face 22AL and a right groove side face 22AR, which are axial side faces) is formed at the axial center portion of the outer ring 22, and the surface on the left side of the annular groove 22A serves as the left raceway surface while the surface on the right side of the annular groove 22A serves as the right raceway surface. The inner rings 24L and 24R are axially spaced, across the axial center, from each other at a distance equal to the width of the annular groove 22A and arranged such that their circumferences.axially coincide with each other. Further, left and right flange portions 26LA and 26RA, which are annular, are formed, respectively, at the left retainer 26L and the right retainer 26R retaining, in their pockets, the rolling elements 28L in the left row and the rolling elements 28R in the right row, respectively. The left flange portion 26LA is configured to contact an axial side face of the left inner ring 24L and the left groove side face 22AL that is an axial side face of the outer ring 22. The right flange portion 26RA is configured to contact an axial side face of the right inner ring 24R and the right groove side face 22AR that is another axial side face of the outer ring 22. More specifically, the outer diameters of the left and right flange portions 26LA and 26RA are larger than the inner diameter of the outer ring 22, and the inner diameters of the left and right flange portions 26LA and 26RA are smaller than the outer diameters of the inner rings 24L and 24R. According to this structure, a bearing oil passage 29 is defined between the opposing faces of the left and right flange portions 26LA and 26RA. Further, thrust members 26LB serving as distance-securing means for securing a predetermined distance between the opposing faces of the left and right flange portions 26LA and 26RA are provided on at least one of the left flange portion 26LA and the right flange portion 26RA (note that the thrust members 26LB are provided on the left flange portion 26LA in the example illustrated in FIG. 1). In order not to interfere with the oil flow in the bearing oil passage 29, the thrust members 26LB are provided in two sets, each consisting of the thrust members 26LB arranged radially, and the two sets of the thrust members 26LB are equiangularly arranged.

While the outer ring 22 described above is an axially integrated outer ring having the annular groove 22A provided between the left and right raceway surfaces, the outer ring 22 may alternatively be an outer ring constituted of left and right outer rings that are axially spaced from each other at a distance equal to the width of the annular groove 22A, as the inner rings 24L and 24R are. In a case where the outer ring 22 is constituted of left and right outer rings, the opening of a housing oil passage 10C formed in the bearing housing 10, which will be described later, is present between the left and right outer rings, and therefore any oil hole is not necessarily provided in the outer ring 22. However, in the case of the integrated outer ring 22 described above, an oil hole 22C having an opening at the groove bottom 22AB of the annular groove 22A is formed as a portion of the oil passage formed in the bearing housing 10.

In the first embodiment, the housing oil passage 10C formed in the cam housing 10A of the bearing housing 10 and a shaft side oil passage 30A formed in the camshaft 30 communicate with each other via the bearing oil passage 29 and the oil hole 22C of the outer ring 22.

Provided near an end of the camshaft 30 is a variable valve timing mechanism that changes the timings for opening and closing the intake valves or exhaust valves, which are opened and closed by valve drive cams, not shown in the drawings, by changing the rotational phase of the camshaft 30. More specifically, the variable valve timing mechanism includes an actuator 40 that is constituted of a camshaft sprocket 42 that is rotatable relative to the camshaft 30 and is driven by a crankshaft, not shown in the drawings, via a timing chain, a cover housing 44 that is fixed on the camshaft sprocket 42 and defines therein a plurality of (typically, four) hydraulic chambers equiangularly arranged, and a vane-retaining member 46 that is fixed on the camshaft 30 and includes a plurality of vane portions each separating, circumferentially, the corresponding hydraulic chamber in the cover housing 44 into an advance chamber and a retard chamber. The advance chambers are in communication with the shaft side oil passage 30A formed in the camshaft 30, and the retard chambers are in communication with a shaft side oil passage 30B formed in the camshaft 30. It is to be noted that, in the example illustrated in FIG. 1, the oil is supplied, at predetermined timings, to the shaft side oil passage 30A from the bearing oil passage 29 in the rolling bearing 20 at the first journal of the camshaft 30, and the oil is supplied, at predetermined timings, to the shaft side oil passage 30B from the bearing oil passage 29 in the rolling bearing 20 at the second journal, not shown in the drawings, of the camshaft 30, as will be described later.

More specifically, an oil control valve (will hereinafter be referred to as "OCV") that is a spool valve operating under command signals from an electronic control unit (will hereinafter be referred to as "ECU") is provided on the upstream side of oil paths through which the oil is supplied to the shaft side oil passages 30A and 30B, respectively. The ECU continuously changes the rotational phase of the camshaft 30 by rotating the vane-retaining member 46 of the actuator 40 relative to the camshaft sprocket 42 by switching the oil pressures supplied to the advance chambers and the retard chambers in accordance with the operation state of the engine.

The rolling bearing 20 of the first embodiment is attached in the following procedure. First, the lower half of the outer ring 22, which is constituted of two half parts as mentioned above, is set on the cam housing 10A. Then, the left inner ring 24L, the left retainer 26L retaining, in its pocket, the rolling elements 28L in the left row, the right retainer 26R retaining, in its pocket, the rolling elements 28R in the right row, and the right inner ring 24R are fit on the camshaft 30 in this order. Then, the camshaft 30 with these parts fit thereon is set on the cam housing 10A, and the upper half of the outer ring 22 is put thereon. Then, the cap 10B is put thereon and fixed to the cam housing 10A using bolts, or the like.

According to the above-described structure of the first embodiment, for example, when the operation state of the OCV has been switched, in response to a command signal from the ECU, so as to supply the oil pressure to the advance chambers while releasing the oil pressure from the retard chambers, the oil supplied from the oil pump is delivered into the bearing oil passage 29 via the housing oil passage 10C formed in the cam housing 10A of the bearing housing 10 at the first journal and via the oil hole 22C of the outer ring 22. As the oil is thus delivered into the bearing oil passage 29, the left flange portion 26LA and the right flange portion 26RA, which are positioned apart from each other with their opposing faces spaced at a predetermined distance due to the presence of the thrust members 26LB, move axially, so that the left flange portion 24L comes into contact with the axial side face of the left inner ring 24L and the left groove side face 22AL, which is an axial side face of the outer ring 22, and the right flange portion 26RA comes into contact with the axial side face of the right inner ring 24R and the right groove side face 22AR, which is another axial side face of the outer ring 22. As a result, the bearing oil passage 29 is highly sealed, and the oil is supplied to the advance chambers via the shaft side oil passage 30A of the camshaft 30, which is in communication with the bearing oil passage 29. Thus, oil leaks can be prevented or minimized between the bearing housing 10 and the camshaft 30, and therefore a desired amount of oil and a desired oil pressure can be supplied to the advance chambers.

Meanwhile, when the oil pressure is released from the advance chambers by supplying the oil pressure to the retard chambers, the oil supplied from the oil pump is delivered to the retard chambers via the bearing oil passage 29 in the rolling bearing 20 at the second journal and the shaft side oil passage 30B of the camshaft 30, while the oil pressure from the advance chambers is released via the bearing oil passage 29 in the rolling bearing 20 at the first journal. Further, when the opening-closing timings of the intake valves or exhaust valves are kept constant, the OCV is maintained in the neutral position, using a known technique, so that the oil pressures in the advance and retard chambers are kept at predetermined levels.

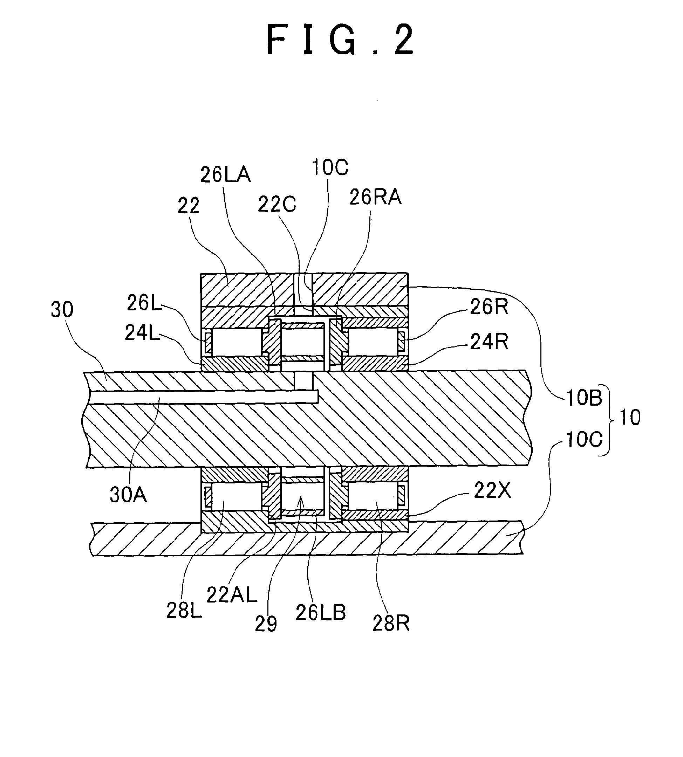

Hereinafter, the second embodiment in which a rolling bearing assembly for a rotational shaft with an oil passage according to the invention is applied to a camshaft of an engine will be described with reference to FIG. 2. Note that like functional portions and parts will be denoted by like reference numerals, and their descriptions will not be repeated and the differences will be mainly described.

In the second embodiment, the outer ring 22 is an integrated outer ring that continuously extends also in the circumferential direction thereof, unlike the outer ring constituted of the two half parts in the first embodiment. The outer ring 22 in the second embodiment is constituted of two parts for easy fitting. More specifically, the outer ring 22 includes, as a separate part, a right raceway surface part 22X corresponding to the right raceway surface in the first embodiment, which is shown in FIG. 1. The inner-diameter of the right raceway-surface part 22X is equal to the inner diameter at the left raceway surface of the outer ring 22, and the outer diameter of the right raceway surface part 22X is equal to the outer diameter at the groove bottom 22AB of the annular groove 22A at the center portion. Note that the housing orl passage 10C formed in the cap 10B communicates with the oil hole 22C of the outer ring 22.

The rolling bearing 20 is attached in the following procedure. First, the left inner ring 24L and the left retainer 26L retaining, in its pocket, the rolling elements 28L in the left row are fit on the camshaft 30. Then, the integrated outer ring 22 is fit such that its left raceway surface is aligned with the rolling elements 28L in the left row. Then, the right retainer 26R retaining, in its pocket, the rolling elements 28R in the right row is set, and then the right inner ring 24R and the right raceway surface part 22X are fit in this order. Then, the camshaft 30 with these parts fit thereon is set on the cam housing 10A, and the cap 10B is put thereon and fixed to the cam housing 10A using bolts, or the like.

According to the second embodiment, too, as the oil is delivered into the bearing oil passage 29, the left flange portion 26LA of the left retainer 26L and the right flange portion 26RA of the right retainer 26R, which are positioned apart from each other with their opposing faces spaced at a predetermined distance due to the presence of the thrust members 26LB, move axially, so that the left flange portion 26LA comes into contact with the axial side face of the left inner ring 24L and the left groove side face 22AL, which is an axial side face of the outer ring 22, and the right flange portion 26RA comes into contact with the axial side face of the right inner ring 24R and a side face of the right raceway surface part 22X, which is another axial side face of the outer ring 22. Thus, oil leaks can be prevented or minimized between the bearing housing 10 and the camshaft 30, and therefore the desired amount of oil and the desired oil pressure can be supplied to the advance chambers.

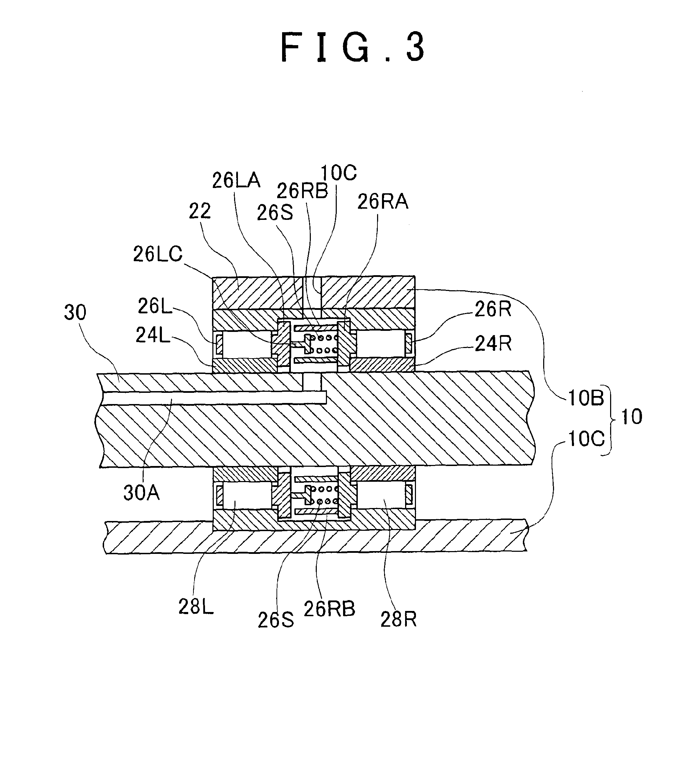

Hereinafter, the third embodiment in which a shaft rolling bearing assembly for a rotational shaft with an oil passage according to the invention is applied to a camshaft of an engine will be described with reference to FIG. 3. Note that like functional portions and parts will be denoted by like reference numerals, and their descriptions will not be repeated and the differences will be mainly described.

In the third embodiment, spring members serving as urging means for urging the left retainer 26L and the right retainer 26R to move axially apart from each other are provided in addition to the thrust members serving as the distance-securing means for securing the predetermined distance between the opposing faces of the left flange portion 26LA of the left retainer 26L and the right flange portion 26RA of the right retainer 26R. More specifically, in the third embodiment, two sets of radially arranged thrust members 26RB, serving as distance-securing means for securing a predetermined distance between the opposing faces of the left and right flange portions 26LA and 26RA, are equiangularly provided on the right flange portion 26RA, and spring support members 26LC are provided on the left flange portion 26LA, and spring members 26S serving as urging means are provided between the spring support members 26LC and the right flange portion 26RA. Note that two or more of the spring support members 26LC are circumferentially arranged and two or more of the spring members 26S are circumferentially arranged, and the intervals therebetween are not necessarily equal to each other.

According to the third embodiment described above, even in a state where the oil pressure is low, for example, immediately after the engine start, high sealing performance can be achieved by the left flange portion 26LA of the left retainer 26L and the right flange portion 26RA of the right retainer 26R being axially pressed by the spring members 26S. Thus, oil leaks can be prevented or minimized between the bearing housing 10 and the camshaft 30 and therefore the desired amount of oil and the desired oil pressure can be supplied to the advance chambers over the entire operation range of the engine.

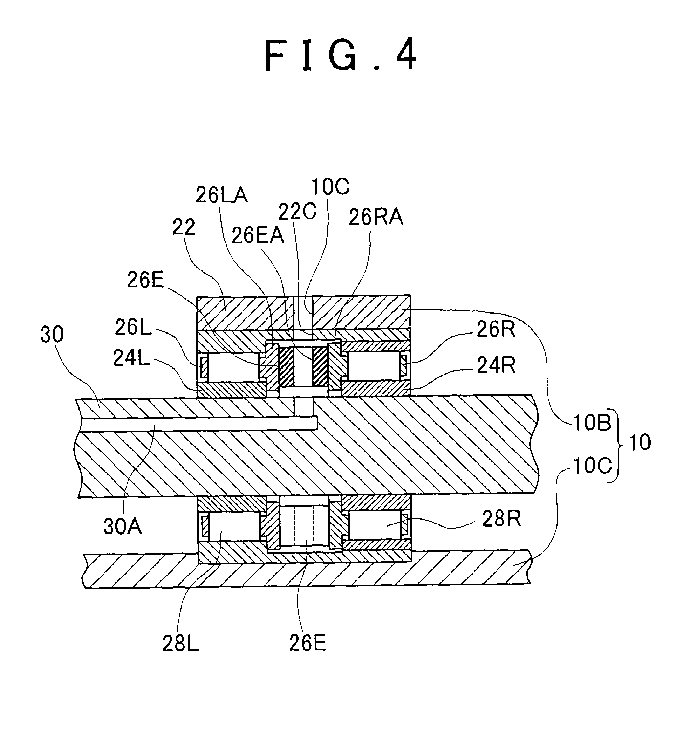

Hereinafter, the fourth embodiment in which a rolling bearing assembly for a rotational shaft with an oil passage according to the invention is applied to a camshaft of an engine will be described with reference to FIG. 4. Note that like functional portions and parts will be denoted by like reference numerals, and their descriptions will not be repeated and the differences will be mainly described.

In the fourth embodiment, an elastic member, which is a rubber member, or the like, is provided in place of the spring members in the third embodiment, which serve as urging means. More specifically, an elastic member 26E in the shape of a cylindrical column is provided between the opposing faces of the left flange portion 26LA of the left retainer 26L and the right flange portion 26RA of the right retainer 26R, and multiple radial holes 26EA serving as oil passages are formed at the elastic member 26E.

According to the fourth embodiment described above, high sealing performance can be achieved owing to the elastic force of the elastic member 26E, and further the sealing performance becomes even higher as the elastic member 26E swells due to the oil.

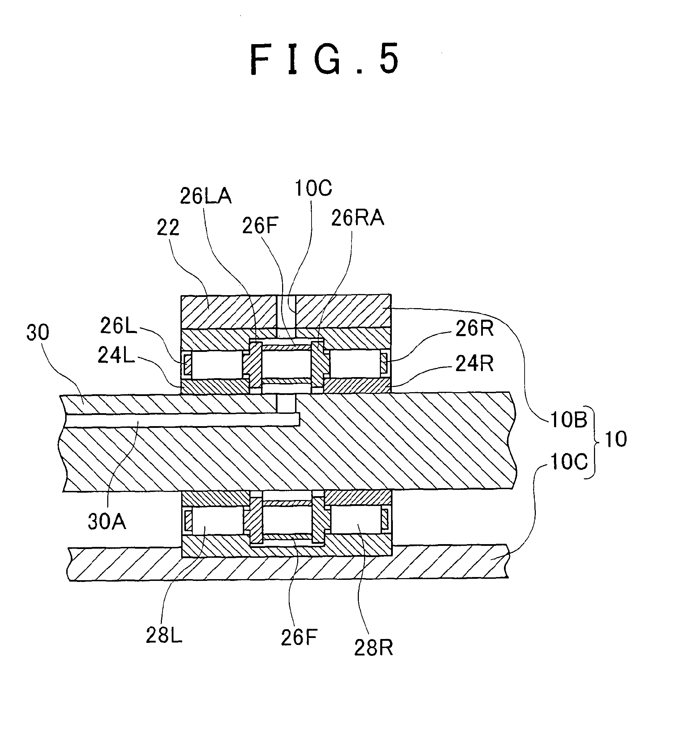

Hereinafter, the fifth embodiment in which a rolling bearing assembly for a rotational shaft with an oil passage according to the invention is applied to a camshaft of an engine will be described with reference to FIG. 5. Note that like functional portions and parts will be denoted by like reference numerals, and their descriptions will not be repeated and the differences will be mainly described.

In the fifth embodiment, connection members serving as connecting means for connecting the left retainer 26L and the right retainer 26R with each other are provided in place of the thrust members serving as the distance-securing means in the first embodiment described above. More specifically, in the fifth embodiment, the left flange portion 26LA of the left retainer 26L and the right flange portion 26RA of the right retainer 26R are connected to each other via connection members 26F that are made of a material having a high thermal expansivity. In order not to interfere with the oil flow in the bearing oil passage 29, the connection members 26F are provided in two sets, each consisting of the connection members 26F arranged radially, and the two sets of the connection members 26F are equiangularly arranged, as in the case of the thrust portions described above. The length and thermal expansivity of the connection members 26F are set such that the left flange portion 26LA does not contact the axial side face of the left inner ring 24L and the left groove side face 22AL, which is an axial side face of the outer ring 22, and the right flange portion 26RA does not contact the axial side face of the right inner ring 24R and the right groove side face 22AR, which is another side face of the outer ring 22, when the engine temperature is low, and such that the left flange portion 26LA contacts the axial side face of the left inner ring 24L and the left groove side face 22AL and the right flange portion 26RA contacts the axial side face of the right inner ring 24R and the right groove side face 22AR after the engine has warmed up.

According to the fifth embodiment, although the sealing performance is relatively low when the engine temperature is low, more oil is allowed to be supplied to the rolling elements 28L in the left row and the rolling elements 28R in the right row, eliminating or minimizing the possibility of insufficient lubrication immediately after the engine start. Further, as the engine warms up, the connection members 26F extend due to heat expansion, and thus high sealing performance can be achieved after the engine has warmed up.

While the rolling bearing assembly for a rotational shaft with an oil passage according to the invention has been embodied as the rolling bearing assembly including the double-row rolling bearing in each of the foregoing embodiments, it may be embodied also as, for example, a rolling bearing assembly including a single row rolling bearing or as a rolling bearing assembly including a rolling bearing having more than two rows of rolling elements.

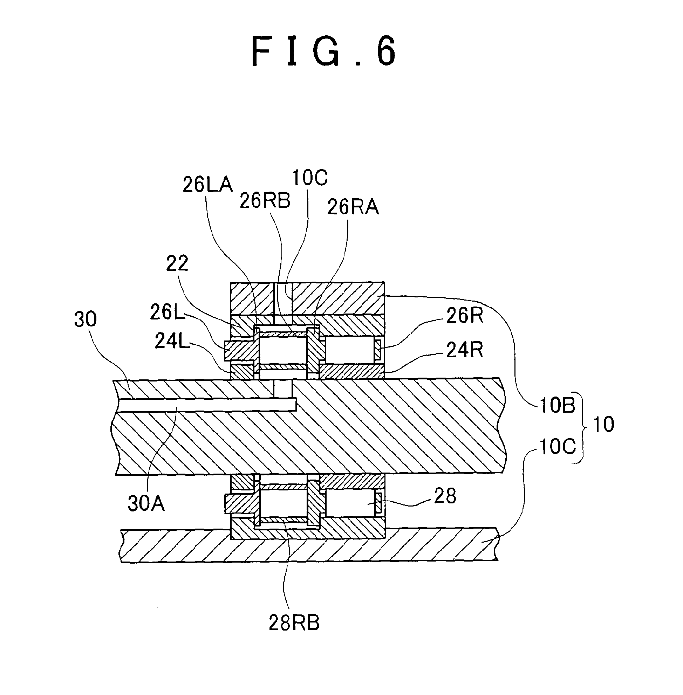

More specifically, as in the sixth embodiment illustrated in FIG. 6, either of the rolling elements 28L in the left row or the rolling elements 28R in the right row may be omitted (note that the rolling elements 28L in the left row are omitted in the example illustrated in FIG. 6). In this case, however, the left retainer 26L is merely a dummy retainer having no pocket for storing the rolling elements 28L, and a flange portion 26LA structured as described above in the foregoing embodiments is provided. It is to be noted that the retainer 26L in the sixth embodiment may be regarded as an example of "support member".

Further, while the invention has been embodied as a rolling bearing assembly for a camshaft with oil passages in each of the foregoing embodiments, it is to be noted that the invention is not limited to such applications. That is, for example, the invention may be embodied as a rolling bearing assembly for various other rotational shafts with an oil passage or oil passages.

While the invention has been described with reference to embodiments thereof, it is to be understood that the invention is not limited to the described embodiments or constructions.

## Claims

1. A rolling bearing assembly for a rotational shaft (30) with an oil passage (30A), comprising:
a bearing housing (10); and
a rolling bearing (20) that is housed in the bearing housing (10) and that rotatably supports the rotational shaft (30) in which the oil passage (30A) is formed,
wherein the rolling bearing (20) includes:
an inner ring (24L, 24R) that is attached on the rotational shaft (30);
an outer ring (22) that is fixed on the bearing housing (10);
a retainer (26L, 26R) that is arranged between the inner ring (24L, 24R) and the outer ring (22); and
a plurality of rolling elements (28L, 28R) that is equiangularly supported by the retainer (26L, 26R),
the rolling bearing assembly for the rotational shaft (30) with the oil passage (30A) further comprising a bearing oil passage (29) that connects an oil passage (10C) formed in the bearing housing (10) and the oil passage (30A) formed in the rotational shaft (30),
the bearing oil passage (29) **characterised in that** at least a portion of said passage is defined by a flange portion (26LA, 26RA) that is formed at the retainer (26L, 26R) such that the flange portion (26LA, 26RA) is configured to contact an axial side face of the inner ring (24L, 24R) and an axial side face of the outer ring (22) .

2. The rolling bearing assembly according to claim 1, wherein:
an outer diameter of the flange portion (26LA, 26RA) is larger than an inner diameter of the outer ring (22); and
an inner diameter of the flange portion (26LA, 26RA) is smaller than an outer diameter of the inner ring (24L, 24R).

3. The rolling bearing assembly according to claim 1 or 2, wherein:
the rolling bearing (20) is a multi-row rolling bearing;
a plurality of the retainers (26L, 26R) is provided in a multi-row and each of the plurality of the retainers (26L, 26R) is arranged in respective row of the multi-row rolling bearing; and
the bearing oil passage (29) is defined between the flange portions (26LA, 26RA) that are formed at the respective retainers (26L, 26R).

4. The rolling bearing assembly according to claim 3, wherein:
the flange portions (26LA, 26RA) include a pair of a left flange portion (26LA) and a right flange portion (26RA) that are axially arranged;
the outer ring (22) includes a pair of a left groove side face (22AL) and a right groove side face (22AR) that are axially arranged;
the inner ring (24L, 24R) includes a pair of a left inner ring (24L) and a right inner ring (24R) that are axially arranged;
the left flange portion (26LA) is configured to contact the left groove side face (22AL) and the left inner ring (24L); and
the right flange portion (26RA) is configured to contact the right groove side face (22AR) and the right inner ring (24R).

5. The rolling bearing assembly according to claim 3 or 4, wherein at least one of the flange portions (26LA, 26RA) includes distance-securing means (26LB; 26RB) for securing a predetermined distance between the flange portions (26LA, 26RA).

6. The rolling bearing assembly according to claim 5, wherein a plurality of the distance-securing means (26LB; 26RB) is equiangularly arranged.

7. The rolling bearing assembly according to any one of claims 3 to 6, further comprising urging means (26S; 26E) for urging the plurality of retainers (26L, 26R) apart from each other.

8. The rolling bearing assembly according to claim 7, wherein:
the urging means (26S; 26E) is a spring (26S); and
the spring (26S) is arranged between the flange portions (26LA, 26RA).

9. The rolling bearing assembly according to claim 7, wherein:
the urging means (26S; 26E) is an elastic member (26E); and
the elastic member (26E) is arranged between the flange portions (26LA, 26RA).

10. The rolling bearing assembly according to claim 9, wherein:
the elastic member (26E) is annularly formed; and
the elastic member (26E) includes an oil hole (26EA) through which the oil passage (10C) formed in the bearing housing (10) and the oil passage (30A) formed in the rotational shaft (30) communicate with each other.

11. The rolling bearing assembly according to claim 3 or 4, further comprising connecting means (26F) for connecting the plurality of retainers (26L, 26R).

12. The rolling bearing assembly according to claim 11, wherein a plurality of the connecting means (26F) is equiangularly arranged between the flange portions (26LA, 26RA).

13. The rolling bearing assembly according to claim 1 or 2, further comprising a support member (26L) in which the rolling elements (28L) arranged between the inner ring (24L, 24R) and the outer ring (22) are not housed,
wherein a flange portion (26LA) is formed at the support member (26L) such that the flange portion (26LA) is configured to contact an axial side face of the inner ring (24L) and an axial side face of the outer ring (22), and
wherein the bearing oil passage (29) is defined between the flange portion (26RA) formed at the retainer (26R) and the flange portion (26LA) formed at the support member (26L).

## Patentansprüche

1. Wälzlageranordnung für eine drehende Welle (30) mit einem Öldurchlass (30A), aufweisend:
ein Lagergehäuse (10); und
ein Wälzlager (20), das sich in dem Lagergehäuse (10) befindet und drehbar die drehende Welle (30) trägt, in der der Öldurchlass (30A) ausgebildet ist,
wobei das Wälzlager (20) beinhaltet:
einen Innenring (24L, 24R), der an der drehenden Welle (30) befestigt ist;
einen Außenring (22), der an dem Lagergehäuse (10) befestigt ist;
eine Halterung (26L, 26R), die zwischen dem Innenring (24L, 24R) und dem Außenring (22) angeordnet ist; und
eine Mehrzahl an Wälzelementen (28L, 28R), die gleichwinklig von der Halterung (26L, 26R) gehalten werden,
wobei die Wälzlageranordnung für die drehende Welle (30) mit dem Öldurchlass (30A) ferner einen Lageröldurchlass (29) aufweist, der einen in dem Lagergehäuse (10) ausgebildeten Öldurchlass (10C) und den in der drehenden Welle (30) ausgebildeten Öldurchlass (30A) verbindet,
wobei der Lageröldurchlass (29) **dadurch gekennzeichnet ist, dass** zumindest ein Abschnitt des Durchgangs durch einen Flanschabschnitt (26LA, 26RA) definiert wird, der an der Halterung (26L, 26R) ausgebildet ist, so dass der Flanschabschnitt (26LA, 26RA) so konfiguriert ist, dass er eine axiale Seitenfläche des Innenrings (24L, 24R) und eine axiale Seitenfläche des Außenrings (22) berührt.

2. Wälzlageranordnung nach Anspruch 1, wobei:
ein Außendurchmesser des Flanschabschnitts (26LA, 26RA) größer ist als ein Innendurchmesser des Außenrings (22); und
ein Innendurchmesser des Flanschabschnitts (26LA, 26RA) kleiner ist als ein Außendurchmesser des Innenrings (24L, 24R).

3. Wälzlageranordnung nach Anspruch 1 oder 2, wobei:
das Wälzlager (20) ein mehrreihiges Wälzlager ist;
eine Mehrzahl der Halterungen (26L, 26R) mehrreihig vorhanden sind und jede von der Mehrzahl an Halterungen (26L, 26R) in einer entsprechenden Reihe des mehrreihigen Wälzlagers angeordnet ist; und
der Lageröldurchlass (29) zwischen den Flanschabschnitten (26LA, 26RA) definiert ist, die an den entsprechenden Halterungen (26L, 26R) ausgebildet sind.

4. Wälzlageranordnung nach Anspruch 3, wobei:
die Flanschabschnitte (26LA, 26RA) ein Paar aus einem linken Flanschabschnitt (26LA) und einem rechten Flanschabschnitt (26RA), die axial angeordnet sind, beinhalten;
der Außenring (22) ein Paar aus einer linken Nutseitenfläche (22AL) und einer rechten Nutseitenfläche (22AR), die axial angeordnet sind, beinhaltet;
der Innenring (24L, 24R) ein Paar aus einem linken Innenring (24L) und einem rechten Innenring (24R) beinhaltet, die axial angeordnet sind;
der linke Flanschabschnitt (26LA) so konfiguriert ist, dass er die linke Nutseitenfläche (22AL) und den linken Innenring (24L) berührt; und
der rechte Flanschabschnitt (26RA) so konfiguriert ist, dass er die rechte Nutseitenfläche (22AR) und den rechten Innenring (24R) berührt.

5. Wälzlageranordnung nach Anspruch 3 oder 4, wobei zumindest einer der Flanschabschnitte (26LA, 26RA) eine distanzsichernde Einrichtung (26LB; 26RB) zum Sichern einer vorgegebenen Distanz zwischen den Flanschabschnitten (26LA, 26A) beinhaltet.

6. Wälzlageranordnung nach Anspruch 5, wobei eine Mehrzahl der distanzsichernden Einrichtungen (26LB; 26RB) gleichwinklig angeordnet ist.

7. Wälzlageranordnung nach einem der Ansprüche 3 bis 6, ferner aufweisend eine Antriebseinrichtung (26S; 26E), um die Mehrzahl an Halterungen (26L, 26R) unabhängig voneinander anzutreiben.

8. Wälzlageranordnung nach Anspruch 7, wobei:
die Antriebseinrichtung (26S; 26E) eine Feder (26S) ist; und
die Feder (26S) zwischen den Flanschabschnitten (26LA, 26RA) angeordnet ist.

9. Wälzlageranordnung nach Anspruch 7, wobei:
das Antriebsmittel (26S; 26E) ein elastisches Element (26E) ist; und
das elastische Element (26E) zwischen den Flanschabschnitten (26LA, 26RA) angeordnet ist.

10. Wälzlageranordnung nach Anspruch 9, wobei:
das elastische Element (26E) ringförmig ausgebildet ist; und
das elastische Element (26E) ein Ölloch (26EA) beinhaltet, durch das hindurch der in dem Lagergehäuse (10) ausgebildete Öldurchlass (10C und der in der drehenden Welle (30) ausgebildete Öldurchlass (30A) miteinander in Verbindung stehen.

11. Wälzlageranordnung nach Anspruch 3 oder 4, ferner aufweisend eine Verbindungseinrichtung (26F) zum Verbinden der Mehrzahl an Halterungen (26L, 26R).

12. Wälzlageranordnung nach Anspruch 11, wobei eine Mehrzahl der Verbindungseinrichtungen (26F) gleichwinklig zwischen den Flanschabschnitten (26LA, 26RA) angeordnet ist.

13. Wälzlageranordnung nach Anspruch 1 oder 2, ferner aufweisend ein Tragelement (26L), in dem sich die Wälzelemente (28L), die zwischen dem Innenring (24L, 24R) und dem Außenring (22) angeordnet sind, nicht befinden,
wobei ein Flanschabschnitt (26A) an dem Tragelement (26L) ausgebildet ist, so dass der Flanschabschnitt (26LA) so konfiguriert ist, dass er eine axiale Seitenfläche des Innenrings (24L) und eine axiale Seitenfläche des Außenrings (22) berührt, und
wobei der Lageröldurchlass (29) zwischen dem an der Halterung (26R) ausgebildeten Flanschabschnitt (26RA) und dem an dem Tragelement (26L) ausgebildeten Flanschabschnitt (26LA) definiert ist.

## Revendications

1. Ensemble de palier à roulement pour un arbre rotatif (30) avec un passage d'huile (30A), comprenant :
un boîtier de palier (10) ; et
un palier à roulement (20) qui est logé dans le boîtier de palier (10) et qui supporte en rotation l'arbre rotatif (30) dans lequel le passage d'huile (30A) est formé,
dans lequel le palier à roulement (20) comprend :
une bague interne (24L, 24R) qui est fixée sur l'arbre rotatif (30) ;
une bague externe (22) qui est fixée sur le boîtier de palier (10) ;
un dispositif de retenue (26L, 26R) qui est agencé entre la bague interne (24L, 24R) et la bague externe (22) ; et
une pluralité d'éléments de roulement (28L, 28R) qui sont supportés de manière équiangulaire par le dispositif de retenue (26L, 26R),
l'ensemble de palier à roulement pour l'arbre rotatif (30) avec le passage d'huile (30A) comprenant en outre un passage d'huile de palier (29) qui raccorde un passage d'huile (10C) formé dans le boîtier de palier (10) et le passage d'huile (30A) formé dans l'arbre rotatif (30),
le passage d'huile de palier (29) étant **caractérisé en ce qu'**au moins une partie dudit passage est définie par une partie de bride (26LA, 26RA) qui est formée au niveau du dispositif de retenue (26L, 26R) de sorte que la partie de bride (26LA, 26RA) est configurée pour être en contact avec une face latérale axiale de la bague interne (24L, 24R) et une face latérale axiale de la bague externe (22).

2. Ensemble de palier à roulement selon la revendication 1, dans lequel :
un diamètre externe de la partie de bride (26LA, 26RA) est supérieur à un diamètre interne de la bague externe (22) ; et
un diamètre interne de la partie de bride (26LA, 26RA) est inférieur à un diamètre externe de la bague interne (24L, 24R).

3. Ensemble de palier à roulement selon la revendication 1 ou 2, dans lequel :
le palier à roulement (20) est un palier à roulement à plusieurs rangées ;
une pluralité de dispositifs de retenue (26L, 26R) est prévue dans plusieurs rangées et chacun de la pluralité de dispositifs de retenue (26L, 26R) est agencé dans la rangée respective du palier à roulement à plusieurs rangées ; et
le passage d'huile de palier (29) est défini entre les parties de bride (26LA, 26RA) qui sont formées au niveau des dispositifs de retenue (26L, 26R) respectifs.

4. Ensemble de palier à roulement selon la revendication 3, dans lequel :
les parties de bride (26LA, 26RA) comprennent une paire composée d'une partie de bride gauche (26LA) et d'une partie de bride droite (26RA) qui sont agencées de manière axiale ;
la bague externe (22) comprend une paire composée d'une face latérale de rainure gauche (22AL) et d'une face latérale de rainure droite (22AR) qui sont agencées de manière axiale ;
la bague interne (24L, 24R) comprend une paire composée d'une bague interne gauche (24L) et d'une bague interne droite (24R) qui sont agencées de manière axiale ;
la partie de bride gauche (26LA) est configurée pour être en contact avec la face latérale de rainure gauche (22AL) et la bague interne gauche (24L) ; et
la partie de bride droite (26RA) est configurée pour être en contact avec la face latérale de rainure droite (22AR) et la bague interne droite (24R).

5. Ensemble de palier à roulement selon la revendication 3 ou 4, dans lequel au moins l'une des parties de bride (26LA, 26RA) comprend des moyens de détermination de distance (26LB ; 26RB) afin de déterminer une distance prédéterminée entre les parties de bride (26LA, 26RA).

6. Ensemble de palier à roulement selon la revendication 5, dans lequel une pluralité de moyens de détermination de distance (26LB ; 26RB) sont agencés de manière équiangulaire.

7. Ensemble de palier à roulement selon l'une quelconque des revendications 3 à 6, comprenant en outre des moyens de poussée (26S ; 26E) pour pousser la pluralité de dispositifs de retenue (26L, 26R) à distance les uns des autres.

8. Ensemble de palier à roulement selon la revendication 7, dans lequel :
le moyen de poussée (26S ; 26E) est un ressort (26S) ; et
le ressort (26S) est agencé entre les parties de bride (26LA, 26RA).

9. Ensemble de palier à roulement selon la revendication 7, dans lequel :
le moyen de poussée (26S ; 26E) est un élément élastique (26E) ; et
l'élément élastique (26E) est agencé entre les parties de bride (26LA, 26RA).

10. Ensemble de palier à roulement selon la revendication 9, dans lequel :
l'élément élastique (26E) est formé de manière annulaire; et
l'élément élastique (26E) comprend un trou d'huile (26EA) à travers lequel le passage d'huile (10C) formé dans le boîtier de palier (10) et le passage d'huile (30A) formé dans l'arbre rotatif (30) communiquent entre eux.

11. Ensemble de palier à roulement selon la revendication 3 ou 4, comprenant en outre des moyens de raccordement (26F) pour raccorder la pluralité de dispositifs de retenue (26L, 26R).

12. Ensemble de palier à roulement selon la revendication 11, dans lequel une pluralité de moyens de raccordement (26F) sont agencés de manière équiangulaire entre les parties de bride (26LA, 26RA).

13. Ensemble de palier à roulement selon la revendication 1 ou 2, comprenant en outre un élément de support (26L) dans lequel les éléments de roulement (28L) agencés entre la bague interne (24L, 24R) et la bague externe (22) ne sont pas logés,
dans lequel une partie de bride (26LA) est formée au niveau de l'élément de support (26L) de sorte que la partie de bride (26LA) est configurée pour être en contact avec une face latérale axiale de la bague interne (24L) et une face latérale axiale de la bague externe (22), et
dans lequel le passage d'huile de palier (29) est défini entre la partie de bride (26RA) formée au niveau du dispositif de retenue (26R) et la partie de bride (26LA) formée au niveau de l'élément de support (26L).
